# EUROPÄISCHE PATENTSCHRIFT

(11) **EP 3 370 484 B1**
(45) Veröffentlichungstag und Bekanntmachung des Hinweises auf die Patenterteilung: **01.04.2020**
(21) Anmeldenummer: 18159199.1
(22) Anmeldetag: 28.02.2018
(51) Int. Cl.: H05B 33/08

(54) **LEUCHTDIODENSCHALTUNG UND LEUCHTE**
LIGHT EMITTING DIODE CIRCUIT AND LUMINAIRE
COMMUTATION POUR DIODES ÉLECTROLUMINESCENTES ET LUMINAIRE

(30) Priorität: 01.03.2017 DE 102017104290
(43) Veröffentlichungstag der Anmeldung: 05.09.2018
(73) Patentinhaber: ATLAS ELEKTRONIK GmbH, 28309 Bremen (DE)
(72) Erfinder: Wiesner, Uwe, 28355 Bremen (DE); Wittschief, Norbert, 28832 Achim (DE)
(74) Vertreter: thyssenkrupp Intellectual Property GmbH

(56) Entgegenhaltungen:
- EP-A1- 2 958 405
- US-A1- 2012 068 616
- US-A1- 2015 002 037

## Beschreibung

Die Erfindung betrifft eine Leuchtdiodenschaltung mit einer Leuchtdiodenkette, einem ersten Strombegrenzer, einem zweiten Strombegrenzer und einem Speisekondensator, wobei die Leuchtdiodenkette und der erste Strombegrenzer in Reihe und parallel zur Leuchtdiodenkette und dem ersten Strombegrenzer der Speisekondensator und der zweite Strombegrenzer in Reihe geschaltet sind, sodass bei einem Unterschreiten einer Versorgungsspannung der Leuchtdiodenkette der Speisekondensator der Leuchtdiodenkette einen Strom aufprägt, sowie eine Leuchte mit einer Leuchtdiodenschaltung.

Moderne Beleuchtungssysteme, wie beispielsweise Straßenlaternen, verwenden als Lichtquellen häufig LEDs (Light Emitting Diodes). Dabei sind zumeist LEDs in Reihe zueinander geschaltet, um die entsprechende Beleuchtungsstärke gewährleisten zu können. Die Leuchtausbeute derartiger LEDs ist gegenüber konventionellen Glühbirnen äußert vorteilhaft.

Bei gleichgerichteten Versorgungsspannungen für derartige LED-Ketten kann es beim Unterschreiten einer notwendigen Versorgungsspannung für die LED-Kette zu einem Ausschalten der Leuchtdioden führen, was zu einem sogenannten Flickern führt. Um dies zu vermeiden, wurde im Stand der Technik vorgeschlagen, parallel zur LED-Kette einen Speisekondensator zu schalten, welcher sich bei entsprechender Spannung auflädt und nach Unterschreiten der Versorgungsspannung für die LED-Kette die LED-Kette mit Spannung und somit mit dem relevanten Strom versorgt.

Dabei ist sowohl bei der LED-Kette als auch bei dem Speisekondensator jeweils eine Konstantstromquelle in Reihe geschaltet, sodass zum einen die Versorgung der LED-Kette gewährleistet wird und zum anderen ein verringerter Einschaltstrom vorliegt.

Derartige Schaltungen führen dazu, dass ein für den Energieversorger ungünstiger Stromverlauf vorliegt, welche diese beispielsweise mit entsprechender Blindleistung kompensieren muss.

Weiterhin können gemäß Norm zulässige Änderungen der Netzspannung (z.B. 230V_{eff±}10%) zu niedrigeren Werten zu einem Flickern und bei höheren Werten zu mehr Verlustleistung führen.

Vorrichtungen und Verfahren, um Beleuchtungen auszugestalten und anzusteuern und um Ströme zu wandeln, sind beispielsweise aus folgenden Veröffentlichungen bekannt:
DE 20 2005 006 053 U1 und dort Fig. 9 und Fig. 11,
US 2005/0002211 A1 und dort Fig. 7A bis Fig. 9,
US 2015/0002037 A1 und dort Fig. 5 und Fig. 6,
US 2015/0236612 A1 und dort Fig. 2 und Fig. 3,
US 2016/0095179 A1 und dort Fig. 1 bis Fig. 9 und
EP 2512207 A1 und dort Fig. 1 und Fig. 2.

US 2015/002037 zeigt eine Ansteuervorrichtung für Leuchtdioden.

EP 2 958 405 A1 zeigt eine Stromversorgungsschaltung zum Erhöhen der Flackerfrequenz einer Leuchtdiode.

US 2012/0068616 A1 zeigt eine LED-Treiberschaltung, die die Erzeugung von Oberwellenrauschen unterdrücken kann.

Aufgabe der Erfindung ist es, den Stand der Technik zu verbessern.

Gelöst wird die Aufgabe durch eine Leuchtdidodenschaltung gemäß Anspruch 1. Weitere teilhafte Ausführungsformen ergeben sich aus den Unteransprüchen.

Dadurch wird der Einschaltstrom weiter verringert und über einen längeren Zeitraum verteilt. Somit können Sicherungen niederdimensioniert werden. Die Stromaufnahme der Schaltung wird in der Amplitudenhöhe verringert und zeitlich gestreckt. Dies stellt insbesondere für den Energieversorger einen besseren Stromverlauf (sinusförmiger) dar, sodass (teure) Blindleistung eingespart werden kann. Zudem ist vorteilhaft, dass auch bei einem Dimmen ein günstiger Stromverlauf bereitgestellt werden kann.

### Folgendes Begriffliche sei erläutert:

Eine "Leuchtdiodenschaltung" ist insbesondere eine Schaltung zum Betreiben und Ansteuern einer LED-Kette. Standardmäßig werden derartige Leuchtdiodenschaltungen auf Platinen realisiert, auf denen die entsprechenden Bauteile angeordnet und mittels Leiterbahnen verbunden sind.

Ein "Strombegrenzer" ist insbesondere eine Konstantstromquelle, welche durch ihr eigenes Verhalten einen konstanten Strom in dem entsprechenden Leitungszweig bereitstellt. Unter "einstellbar" in diesem Zusammenhang wird verstanden, dass dem Strombegrenzer ein Stromwert aufgeprägt wird, welcher diesen dem Schaltungszweig aufprägt. Vorliegende Strombegrenzer können sowohl mit Bipolartransistoren, Feldeffekttransistoren, Operationsverstärker oder integrierten Schaltungen realisiert werden. Sofern der Strombegrenzer als Konstantstromquelle ausgestaltet ist, handelt es sich um eine Schaltung, deren Zweck es ist, den Strom durch die Last (LED-Kette) möglichst konstant zu halten. Dabei werden Änderungen des Stroms infolge von Lastwiderstandsänderungen durch Variationen der Betriebsspannungen und/oder des Innenwiderstands entgegengewirkt.

Ein "Speisekondensator" ist insbesondere ein Elko(Elektrolytkondensator). Wird an einen derartigen Kondensator eine Spannung angelegt, so lädt sich dieser Kondensator auf. Auch ein Stromfluss in den Kondensator führt zum Aufladen des Speisekondensators. Sobald die Ladespannung sinkt und die Entladung erreicht wird, stellen derartige Kondensatoren elektrische Energie für nachgelagerte Verbraucher zur Verfügung. Insbesondere bei gleichgerichteten Wechselspannungen kann somit eine homogene Spannungsversorgung für nachgelagerte Verbraucher (beispielsweise die LED-Kette) bereitgestellt werden.

Bei "in Reihe geschalteten" Bauteilen fließt der gleiche Strom durch die Bauteile. An "zueinander parallel geschalteten" Bauteilen oder Schaltelementen liegt jeweils die gleiche Spannung an.

Eine "Steuerung" ist ein Bauelement und setzt insbesondere abhängig von einem Messwert einen Stellwert. Der vorliegende Begriff der Steuerung umfasst zusätzlich die Funktion und die Umsetzung einer Regelung, bei der eine Rückkopplung des gesetzten Steuerwertes zum Messwert erfolgt. Vorliegend ist die Steuerung durch eine Mikroprozessorschaltung realisiert, welche beispielsweise abhängig von anderen Parametern, wie beispielsweise Zeit oder Phasenlage der Versorgungsspannung, die Steuerung aktiviert.

Der "Spannungsabfall am ersten Strombegrenzer" beträgt idealerweise 0 Volt oder etwas höhere Werte wie beispielsweise 5,0 Volt. Aufgrund von gemäß der Norm zulässigen Spannungsschwankungen einer Versorgungsspannung (230 V_{eff} ± 10%) kann der Wert des Spannungsabfalls über dem ersten Strombegrenzer höher oder niedriger sein. In dem Fall, dass der Wert zu niedrig ist, kann dann die Spannung beim zweiten Strombegrenzer einen höheren Stromwert als Stellsignal aufprägen, sodass der Kondensator höher geladen wird, um im Anschluss die LED-Kette ausreichend zu versorgen. Für den Fall, dass die Versorgungsspannung deutlich höher ist, führt dies dazu, dass der Wert des Spannungsabfalls am ersten Strombegrenzer deutlich höher ist und somit Verlustleistung entsteht, was wiederum die Wärmeaufnahme der Leuchtdiodenschaltung erhöht. In diesem Fall stellt die Steuerung für den variablen zweiten Strombegrenzer einen niedrigen Wert, sodass der Speisekondensator weniger geladen wird und anschließend die LED-Kette mit einer niedrigen Spannung zu versorgen. Dabei kann der Spannungsabfall am ersten Strombegrenzer durch die Steuerung kontinuierlich oder phasenabhängig bestimmt werden. So kann die Steuerung aktiv werden, wenn zu einer bestimmten Phasenlage der Versorgungsspannung der Spannungsabfall am Strombegrenzer einen vorgegebenen Wert unter- oder überschreitet. In diesem Fall ist insbesondere die Verlustleistung am ersten Strombegrenzer verringert, sodass ein vorteilhafter Wirkungsgrad der Leuchtdiodenschaltung gegeben ist.

Insbesondere bestimmt die Steuerung die Höhe des konstanten Stroms des zweiten Strombegrenzers im Ladefall des Speisekondensators.

In einer diesbezüglichen Ausgestaltung ist parallel zum zweiten variablen Strombegrenzer eine Diode geschaltet. Diese Diode ist während des Ladens des Speisekondensators hochohmig und im Falle des Entladens des Speisekondensators kurzgeschlossen.

Somit wird insbesondere im Ladefall die Verlustleistung der Leuchtdiodenschaltung weiter verringert.

Eine "Diode" ist insbesondere ein elektrisches Bauelement, das Strom in eine Richtung fast ungehindert passieren lässt und in der anderen Richtung fast isoliert.

Um eine Helligkeitseinstellung der LED-Kette einzustellen, weist die Leuchtdiodenschaltung einen Dimmer, insbesondere einen Phasenabschnittsdimmer, auf.

Ein "Dimmer" ist insbesondere ein Thyristorsteller oder auch Triacsteller zur Steuerung der Helligkeit von LEDs. Dabei wird häufig ein sogenannter Phasenabschnittsdimmer eingesetzt. Derartige Phasenabschnittsdimmer realisieren häufig eine Phasenabschnittsteuerung oder eine Phasenanschnittsteuerung. Bei einer Phasenanschnittsteuerung wird bei einer Wechselspannung der Strom verzögert nach dem Nulldurchgang der Wechselspannung eingeschaltet und fließt bis zum nächsten Nulldurchgang. Bei einer Phasenabschnittsteuerung ist dies umgekehrt. Der Strom wird nach dem Nulldurchgang sofort eingeschaltet und vor dem nächsten Nulldurchgang wieder ausgeschaltet. Hierzu werden insbesondere abschaltbare Thyristoren oder Power-MOSFETs oder auch IGBTs verwendet. Sofern der Dimmer als Phasenabschnittssteuerung mittels eines Thyristors realisiert wird, benötigt dieser Dimmer über die gesamte Zeit einen gewissen Versorgungsstrom, welcher durch die Leuchtdiodenschaltung bereitgestellt wird. Allgemein kann Dimmen auch durch ansteuerbare Schalter oder Schnittstellen erfolgen.

Vorliegend kann die Leuchtdiodenschaltung den Spannungsverlauf beispielsweise mittels der Steuerung bestimmen. Wird nun eine Dimmmung erkannt, kann dem ersten Strombegrenzer, welcher in diesem Falle als einstellbarer Strombegrenz ausgestaltet ist, ein Wert aufgeprägt werden, sodass eine Helligkeitseinstellung der Leuchtdiodenkette erfolgt. Das Einstellen des Wertes für den einstellbaren erste Strombegrenzer kann durch die Steuerung erfolgen.

In einer weiteren Ausgestaltung weist die Leuchtdiodenschaltung eine Gleichrichtschaltung auf, welche eine Wechselspannung in eine Gleichspannung überführt. Somit wird gegenüber einer klassischen Wechselspannung quasi eine "Halbwelle hochgeklappt". Somit liegt während der gesamten Zeit eine positive Spannung an, welche ihren Spannungswert phasenabhängig ändert. Insbesondere ist die Gleichrichterschaltung als Graez-Brückengleichrichter ausgestaltet.

Damit die Leuchtdiodenschaltung mit Energie versorgt wird, weist diese eine Spannungsversorgung auf.

Die Spannungsversorgung ist insbesondere eine Netzspannung, die beispielsweise 230 V_{eff} beträgt und welche zwischen einem Nullleiter und einer Phase anliegt.

In einer weiteren Ausgestaltung weist die Leuchtdiodenschaltung einen steuerbaren Spannungsversorgungsschalter auf, welcher derart beschaltet ist, dass oberhalb eines Grenzwertes eines Spannungsabfalls des ersten Strombegrenzers der Stromversorgungsschalter in einer Offenstellung und unterhalb oder bei Erreichen des Grenzwertes des Spannungsabfalls des ersten Strombegrenzers in einer Geschlossenstellung ist.

Somit kann beispielsweise der Spannungsversorgungsschalter im Bereich einer Spannungsspitze der anliegenden Spannung für einige Millisekunden geöffnet werden. Dies führt dazu, dass eine an dem ersten Strombegrenzer und dem zweiten Strombegrenzer anliegende Spannung "abgeschaltet" wird, sodass während dieser Zeit der erste Strombegrenzer und/oder der zweite Strombegrenzer keine Verlustleistung erzeugen. Grundsätzlich erfolgt somit das Öffnen des Spannungsversorgungsschalters zeitlich kurz nach dem erstmaligen Laden des Speisekondensators und wird zeitlich kurz vor dem darauf folgenden Entladen wieder geschlossen.

Dies hat zur Folge, dass zuerst der Speisekondensator geladen wird, anschließend folgt beispielsweise innerhalb einer Halbwelle das Entladen, wobei kurz vor dem Entladen, welches bei geschlossenem Schalter folgen würde, ein neuerliches Laden des Speisekondensators erfolgt. Während der Offenstellung des Spannungsversorgungsschalters versorgt somit der Speisekondensator die Leuchtdioden mit der entsprechenden Spannung und prägt somit der Leuchtdiodenkette den relevanten Strom auf. Das Beschalten des Spannungsversorgungsschalters kann dabei wiederum durch die Steuerung erfolgen, welche entweder das Beschalten phasenabhängig oder versorgungsspannungsabhängig oder anhand des Spannungsabfalls des ersten Strombegrenzers bewirkt. Der Spannungsversorgungsschalter kann hierbei wiederum durch einen Transistor oder dergleichen realisiert werden.

In einer weiteren Ausführungsform sind parallel zur Leuchtdiodenkette und dem ersten Strombegrenzer ein dritter Strombegrenzer und ein Strombegrenzerschalter angeordnet, wobei der dritte Strombegrenzer und der Strombegrenzungsschalter in Reihe geschaltet sind und die Leuchtdiodenschaltung derart eingerichtet ist, dass durch ein Beschalten des Strombegrenzerschalters der dritte Strombegrenzer dem Dimmer einen Dimmermindeststrom aufprägt.

Aufgrund dessen, dass beispielsweise für den Fall, dass der Spannungsversorgungsschalter in einer Offenstellung ist, könnte der Mindestversorgungsstrom für den Dimmer und somit für die Phasenabschnittsdimmung nicht bereitgestellt werden. Soweit also der Spannungsversorgungsschalter in einer Offenstellung ist, kann der Strombegrenzerschalter in eine Geschlossenstellung verbracht werden und vice versa, sodass der Dimmer permanent mit dem ausreichenden Strom versorgt wird. Auch für den Fall, dass der Spannungsversorgungsschalter geschlossen ist und kein Ladetrom in den Speisekondensator fließt, kann der Strombegrenzerschalter ebenfalls geschlossen werden, sodass ein Mindeststrom fließt und der Dimmer mit dem nötigen Dimmerstrom versorgt wird.

Unter der Begrifflichkeit "parallel ... angeordnet" kann im gesamten Text eine klassische Parallelschaltung verstanden werden. Zusätzlich oder auch alternativ können weitere Bauteile in Reihe und/oder parallel mit der Leuchtdiodenkette oder dem ersten Strombegrenzer und/oder mit dem dritten Strombegrenzer und dem Strombegrenzerschalter und/oder weiteren Schaltungselementen geschaltet sein.

Analoges gilt für die Begrifflichkeit "in Reihe ... angeordnet" im Text. Hierfür gilt, dass zusätzlich für einzelne Bauteile der in Reihe angeordneten Bauteilen zu diesen Bauteilen oder Bauteilgruppen auch weitere Bauteile parallel geschaltet sein können.

Um die Leuchtdiodenschaltung insbesondere vor Blitzeinschlägen in der Nähe, insbesondere in die Spannungsleitungen, zu schützen, kann die Leuchtdiodenschaltung eine Stoßspannungsfestigkeitsschaltung, welche spannungsversorgungsseitig einen Spannungsbegrenzer, insbesondere Varistor, aufweist, und wobei die Stoßspannungsfestigkeitsschaltung parallel zur Leuchtdiodenkette und dem ersten Strombegrenzer eine Zener-Diode, insbesondere eine TVS-Diode, angeordnet ist und einen zur Leuchtdiodenkette und ersten Strombegrenzer in Reihe angeordneten ohmschen Widerstand aufweist.

In einer diesbezüglichen Ausführungsform wird statt dem ohmschen Widerstand ein vierter Strombegrenzer in Reihe zur Leuchtdiodenkette und dem ersten Strombegrenzer geschaltet. Somit kann gewährleistet werden, dass beispielsweise Blitzeinschläge keine erhöhten und unzulässigen Ströme in der Leuchtdiodenschaltung erzeugen.

Insbesondere ist ein "Varistor" ein elektronisches Bauteil, das sich durch einen spannungsabhängigen Widerstand auszeichnet. Oberhalb einer bestimmten Schwellenspannung, die typisch für den jeweiligen Varistor ist, wird der differentielle Widerstand abrupt kleiner. Die Kennlinie ist dabei symmetrisch zur Spannung, die Polarität spielt im Allgemeinen keine Rolle. Der Begriff Varistor setzt sich aus den englischen Begriffen "variable resistor" zusammen. Derartige Varistoren werden häufig auch als VDR bezeichnet (Voltage Dependent Resistor). Auch sind Metalloxidvaristoren bekannt, deren Abkürzung MOV ist.

Auch die LED-Kette selbst benötigt einen Schutz gegen einen (negativen) Blitzeinschlag. Dabei ist der fünfte Strombegrenzer insbesondere so ausgelegt, dass auch bei einem Betriebsstrom die LEDs der LED-Kette niederohmig bleiben und bei höherem Blitzstrom hochohmig werden und der Strom auf einen Wert begrenzt wird, welche den LEDs keinen Schaden zuführt. Eine derartige Schaltung schützt insbesondere auch vor sogenannten negativen Blitzen. Somit ist ein sehr guter Blitzschutz möglich, ohne Einschränkungen beim Wirkungsgrad hinzunehmen.

In einem weiteren Aspekt wird die Aufgabe gelöst durch eine Leuchte, insbesondere Straßenlaterne, welche eine zuvor beschriebene Leuchtdiode aufweist.

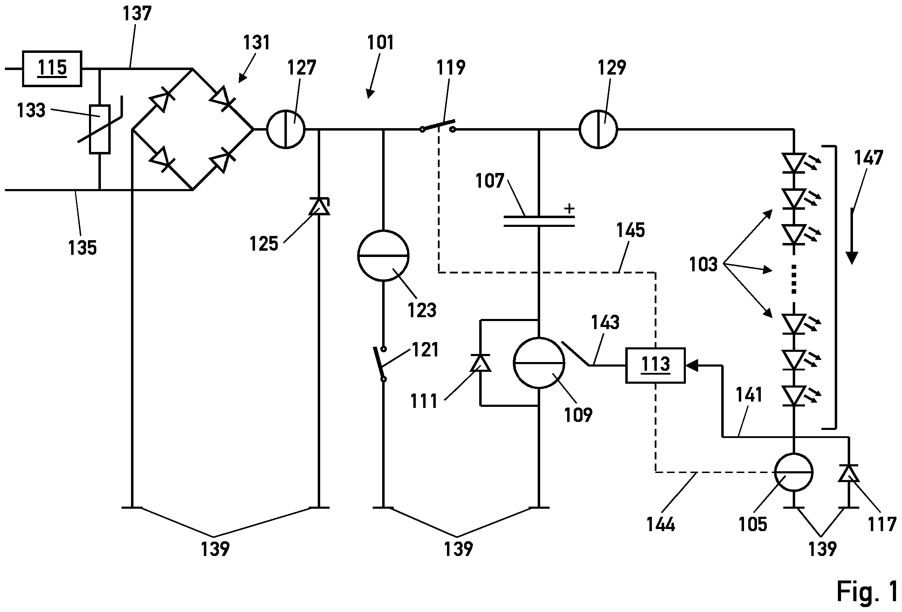

Im Weiteren wird die Erfindung anhand eines Ausführungsbeispiels näher erläutert. Es zeigen
- Figur 1: eine schematische Darstellung einer Leuchtdiodenschaltung in einer maximalen Ausgestaltung und
- Figur 2: eine schematische Darstellung eines Schaltzustandes eines Schalters mit zugehörigem Spannungs- und Stromverlauf.

Eine Leuchtdiodenschaltung 101 weist eine Graez-Brückenschaltung 131, eine erste Konstantstromquelle 105, eine zweite Konstantstromquelle 109, eine dritte Konstantstromquelle 123, eine vierte Konstantstromquelle 127, eine fünfte Konstantstromquelle 129, eine Leuchtdioden-Kette 103, einen Phasenabschnittsdimmer 115, einen Mikroprozessor 113, einen Elektrolytkondensator 107, eine erste Diode 111, eine zweite Diode 117, eine TVS-Diode 125, einen Varistor 133 sowie einen ersten Schalter 119 und einen zweiten Schalter 121 auf.

Die LED-Kette 103 ist in Reihe mit der ersten Konstantstromquelle 105 geschaltet. Zudem ist in dieser Reihenschaltung die fünfte Konstantstromquelle 129 geschaltet. Parallel dazu sind der Elektrolytkondensator 107 und die zweite Konstantstromquelle 109 zueinander in Reihe geschaltet, wobei zu der zweiten Konstantstromquelle 109 die erste Diode 111 parallel geschaltet ist. Dazu wiederum sind parallel die dritte Konstantstromquelle 123 und der zweite Schalter 121 zueinander in Reihe geschaltet. Hierzu wiederum ist parallel die TVS-Diode 125 geschaltet. Zu der parallel geschalteten LED-Kette 103 und dem Elektrolytkondensator 107 ist der erste Schalter 119 in Reihe angeordnet. Direkt nach der Graez-Brückenschaltung 131 ist die vierte Konstantstromquelle 127 geschaltet.

Der Mikroprozessor 113 weist einen Spannungsmesser auf, welcher die Spannung 141 (U₁₀₅) und somit die Spannung über der ersten Konstantstromquelle 105 misst. Zudem ist der Mikroprozessor 113 mit der zweiten Konstantstromquelle 109 steuernd verbunden, sodass bei einem Stellsignal 143 des Mikroprozessors 113 der zweiten Konstantstromquelle 109 ein Strom einstellbar ist. Weiterhin ist der Mikroprozessor 113 steuerungstechnisch mit dem ersten Schalter 119 verbunden, wobei der erste Schalter 119 als Transistorsteuerung ausgestaltet ist. Zudem steuert der Mikroprozessor 113 den ebenfalls als Transistor ausgestalteten zweiten Schalter 121 (Steuerungssignal nicht dargestellt).

Eingangsseitig ist die Graez-Brückenschaltung 131 mit einem Nullleiter 135 und einer Phase 137 verbunden. Über den Nullleiter 135 und die Phase 137 wird die Versorgungsspannung zur Verfügung gestellt. Zwischen der Phase 137 und dem Nullleiter 135 ist der Varistor 133 schaltungstechnisch angeordnet.

Für eine einfache Realisierung der Erfindung werden vorliegend die Stromquellen 127, 129 und 123 sowie die Schalter 119 und 121 und die TVS-Diode 125 und der Varistor 133 nicht betrachtet.

Bei normaler Netzspannung (U=230V_{eff}) wandelt die Graez-Brückenschaltung 131 das Wechselsignal in eine gleichgerichtete Versorgungsspannung. Dabei wird zuerst der Elektrolytkondensator 107 entsprechend aufgeladen. Sobald die gleichgerichtete Versorgungsspannung unterhalb einer LED-Kettenspannung 147 (U₁₀₃) fällt, ist die erste Diode 111 kurzgeschlossen und der Elektrolytkondensator 107 versorgt die LED-Kette mit der entsprechenden (Betriebs)Spannung und somit mit dem entsprechenden Strom. Sobald die gleichgerichtete Versorgungsspannung wieder ausreicht, um die LED-Kette 103 mit der entsprechenden Spannung und somit mit dem entsprechenden Strom zu versorgen, wird der Elektrolytkondensator 107 geladen. Während des Ladefalls wird die erste Diode 111 in Sperrrichtung betrieben.

Der Mikroprozessor 113 ermittelt die Spannung 141 (U₁₀₅) über der ersten Konstantstromquelle 105. Ist diese Spannung zu dem Zeitpunkt, wenn die Versorgungsspannung 75V übersteigt, oberhalb von 5V, prägt der Mikroprozessor 113 der zweiten Konstantstromquelle 109 das Stellsignal 143 für die zweite Konstantstromquelle 109 auf. Diese verringert den Stromfluss, sodass der Elektrolytkondensator 107 etwas geringer aufgeladen wird, sodass der Entladefall zeitlich etwas später einsetzt. Umgekehrtes erfolgt, sobald die Spannung 141 zu diesem Zeitpunkt unterhalb von 4V ist.

In der nächsten Ausbaustufe der Leuchtdiodenschaltung 101 ist der erste Schalter 119 vorgesehen. Dieser wird ebenfalls von dem Mikroprozessor 113 mittels des Stellsignals 145 für den ersten Schalter 119 abhängig von der Spannung 141 geschaltet.

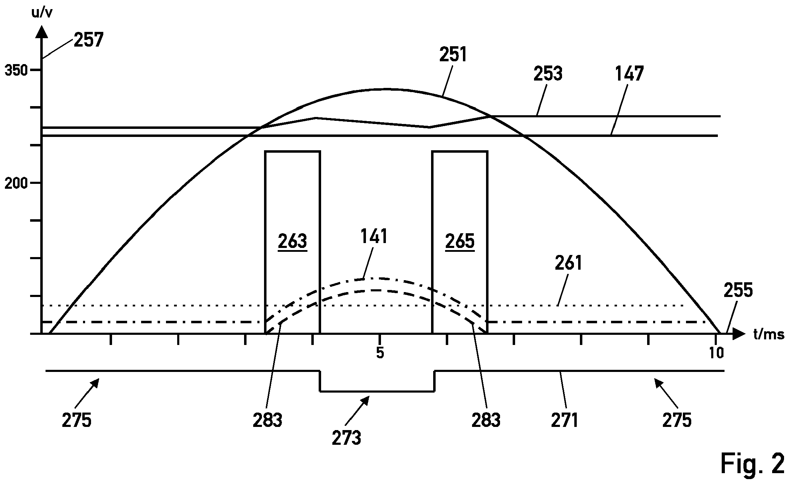

Im Weiteren wird auf die Figur 2 verwiesen. In dem Diagramm ist auf der Ordinate 257 die Spannung in Volt und auf der Abszisse 255 die Zeit in Millisekunden aufgetragen. Es wird der zeitliche Verlauf während einer Halbwelle der gleichgerichteten Spannungsversorgung 251 dargestellt. Während die Spannung ansteigt, fällt die Spannung 253 am Elektrolytkondensator 107 leicht ab (Entladefall). Sobald die Versorgungsspannung 251 größer als die Spannung 253 am Elektrolytkondensator 107 ist, wird dieser aufgeladen. Somit fließt anfänglich der Ladestrom 263 des Elektrolytkondensators 107.

Bis zu diesem Zeitpunkt ist der erste Schalter 119 in einer Geschlossenstellung 275. Um einen Phasenwinkel von 90 ° (entspricht vorliegend der Zeit 5ms) herum wird der erste Schalter 119 in eine Offenstellung 273 verbracht und vorliegend zeitlich symmetrisch danach wieder in eine Geschlossenstellung 275, sodass wiederum ein Ladestrom 265 des Elektrolytkondensators 107 fließt.

Während des Ladens würden ohne Schalten des ersten Schalters 119 in der Geschlossenstellung 275 eine Spannung 141, welche über die erste Konstantstromquelle 105 abfällt, und eine Spannung 283, welche über der zweiten Konstantstromquelle 109 abfällt, anliegen.

Dadurch, dass der erste Schalter 119 in einer Offenstellung 273 ist, liegt die Spannung über der ersten Konstantstromquelle 105 und der zweiten Konstantstromquelle 109 nicht an und hat somit den Wert 0. Dies hat zur Folge, dass keine Verlustleistung erzeugt wird und somit die Leuchtdioden optimal betrieben werden.

Die Steuerung des Schalters übernimmt vorliegend wiederum der Mikroprozessor 113.

In einer weiteren Alternative oder in einer ergänzenden Alternative sind die dritte Konstantstromquelle 123 und der zweite Schalter 121 vorgesehen.

Dies gewährleistet, dass durch das Beschalten des zweiten Schalters 121 der Phasenabschnittsdimmer permanent einen Versorgungsstrom erhält und somit die Dimmfunktion realisiert werden kann.

Das Ansteuersignal für Schalter 121 wird anhand einer Größe, wie beispielsweise der Spannungsabfall, der Konstantstromquelle 109 ermittelt.

In einer weiteren Alternative oder ergänzenden Alternative ist die Spannungsstoßfestigkeitsschaltung integriert. Dazu werden vorliegend der Varistor 133, die TVS-Diode 125 und die vierte Konstantstromquelle 127 verwendet. Der Varistor begrenzt dabei die Eingangsspannung auf 1.200V. Die TVS-Diode 125 begrenzt dann weiter die Spannung auf 650V.

Die vierte Konstantstromquelle 127 ist so ausgelegt, dass sie beim Betriebsstrom niederohmig bleibt und bei einem höheren Blitzstrom hochohmig wird. Somit ist ein sehr guter Blitzschutz möglich, ohne Einschränkungen beim Wirkungsgrad hinnehmen zu müssen, da die vierte Konstatstromquelle 127 die "Spannung" weiter begrenzt.

In einer weiteren Alternative oder einer ergänzenden Alternative sind die fünfte Konstantstromquelle 129 und die zweite Diode 117 vorgesehen. Die zweite Diode 117 ist parallel zur ersten Konstantstromquelle 105 geschaltet und die fünfte Konstantstromquelle ist in Reihe mit der Leuchtdiodenkette 103 und der ersten Konstantstromquelle 105 geschaltet.

Ein negatives Blitzereignis zwischen Potential des Schutzleiters und dem Potential Nullleiters 135 und somit dem Potential der Phase 137 kann es zu einem zerstörenden Stromfluss in den Leuchtdioden der Leuchtdiodenkette 103 kommen, da es Kapazitäten zwischen den Leuchtdioden und dem Schutzleiter gibt. Aufgrund der Stromquelle 129 wird dieser Strom begrenzt und somit wird die Leuchtdiode nicht zerstört.

In jeder der beschriebenen Alternativen kann mittels des Dimmers 115 die Helligkeit der Leuchtdiodenkette 103 eingestellt werden. Hierzu bestimmt mittels eines Sensors der Mikroprozessor 113 die Phasenlage der Versorgungsspannung. Lässt der bestimmte Wert auf eine Dimmung schließen, prägt der Mikroprozessor 113 der ersten Konstantstromquelle 105 mittels eines Stellsignals 144 einen Stromwert auf, sodass dadurch die Leuchtdiodenkette 103 in ihrer Helligkeit eingestellt ist.

### Bezugszeichenliste

- 101: LED-Schaltung
- 103: LED-Kette
- 105: erste Konstantstromquelle
- 107: Elektrolytkondensator
- 109: zweite Konstantstromquelle
- 111: erste Diode
- 113: Mikroprozessor
- 115: Phasenabschnittsdimmer
- 117: zweite Diode
- 119: erster Schalter
- 121: zweiter Schalter
- 123: dritte Konstantstromquelle
- 125: TVS-Diode
- 127: vierte Konstantstromquelle
- 129: fünfte Konstantstromquelle
- 131: Graez-Brückenschaltung
- 133: Varistor
- 135: Nullleiter
- 137: Phase
- 139: Masse
- 141: U₁₀₅
- 143: Stellsignal der zweiten Konstantstromquelle
- 144: Stellsignal der ersten Konstantstromquelle
- 145: Stellsignal des ersten Schalters
- 147: U₁₀₃
- 251: Halbwellenversorgungsspannung
- 253: Spannung am Elektrolytkondensator 107
- 255: Abszisse
- 257: Ordinate
- 261: LED-Strom
- 263: zeitlich erster Ladestrom in dem Elektrolytkondensator 107
- 265: zeitlich zweiter Ladestrom in dem Elektrolytkondensator 107
- 271: zeitliches Schaltverhalten erster Schalter
- 273: Offenstellung
- 275: Geschlossenstellung
- 283: Spannung an der zweiten Konstantstromquelle 109

## Patentansprüche

1. Leuchtdiodenschaltung (101) mit einer Leuchtdiodenkette (103), einem ersten Strombegrenzer (105), einem zweiten Strombegrenzer (109) und einem Speisekondensator (107), wobei die Leuchtdiodenkette und der erste Strombegrenzer in Reihe und parallel zur Leuchtdiodenkette und dem ersten Strombegrenzer der Speisekondensator und der zweite Strombegrenzer in Reihe geschaltet sind, sodass bei einem Unterschreiten einer Versorgungsspannung (147) der Leuchtdiodenkette der Speisekondensator der Leuchtdiodenkette einen Strom aufprägt, wobei die Leuchtdiodenschaltung eine Steuerung aufweist, welche durch eine Mikroprozessorschaltung realisiert ist, **dadurch gekennzeichnet, dass** der zweite Strombegrenzer als einstellbarer Strombegrenzer ausgestaltet ist und die Steuerung (113) dazu eingerichtet ist, anhand eines Spannungsabfalls (141) am ersten Strombegrenzer einen Wert des einstellbaren zweiten Strombegrenzers beim Laden des Speisekondensators einzustellen (143).

2. Leuchtdiodenschaltung nach Anspruch 1, **dadurch gekennzeichnet, dass** parallel zum einstellbaren zweiten Strombegrenzer eine Diode (111) geschaltet ist.

3. Leuchtdiodenschaltung nach einem der vorherigen Ansprüche, **gekennzeichnet durch** eine Gleichrichterschaltung (131), welche dazu ausgebildet ist, eine Wechselspannung in eine Gleichspannung zu überführen.

4. Leuchtdiodenschaltung nach einem der vorherigen Ansprüche, **gekennzeichnet durch** einen Dimmer, insbesondere einen Phasenabschnittsdimmer, welcher zu einer Helligkeitsverstellung der Leuchtdiodenkette einsetzbar ist.

5. Leuchtdiodenschaltung nach einem der vorherigen Ansprüche, **gekennzeichnet durch** eine Spannungsversorgung, welche die Leuchtdiodenschaltung mit Energie versorgt.

6. Leuchtdiodenschaltung nach einem der vorherigen Ansprüche **gekennzeichnet durch** einen steuerbaren Spannungsversorgungsschalter (119), welcher derart ansteuerbar ist, dass er oberhalb eines Grenzwertes des Spannungsabfalls des ersten Strombegrenzers in einer Offenstellung und unterhalb des oder bei Erreichen des Grenzwertes des Spannungsabfalls des ersten Strombegrenzers in einer Geschlossenstellung ist.

7. Leuchtdiodenschaltung nach Anspruch 6, **dadurch gekennzeichnet, dass** die Steuerung dazu ausgebildet ist, den Spannungsversorgungsschalter anzusteuern.

8. Leuchtdiodenschaltung nach einem der Ansprüche 4 bis 7, **dadurch gekennzeichnet, dass** parallel zur Leuchtdiodenkette und dem ersten Strombegrenzer ein dritter Strombegrenzer (123) und ein Strombegrenzerschalter (121) angeordnet sind, wobei der dritte Strombegrenzer und der Strombegrenzerschalter in Reihe geschaltet sind und die Leuchtdiodenschaltung derart eingerichtet ist, dass durch ein Beschalten des Strombegrenzerschalters der dritte Strombegrenzer einen Dimmermindeststrom dem Dimmer aufprägt.

9. Leuchtdiodenschaltung nach einem der vorherigen Ansprüche, **gekennzeichnet durch** eine Stoßspannungsfestigkeitsschaltung, welche spannungsversorgungsseitig einen Spannungsbegrenzer (133), insbesondere Varistor, aufweist, und parallel zur Leuchtdiodenkette und dem ersten Strombegrenzer eine Zener-Diode (125), insbesondere eine TVS-Diode, angeordnet ist und einen zur Leuchtdiodenkette und ersten Strombegrenzer in Reihe angeordneten ohmschen Widerstand aufweist.

10. Leuchtdiodenschaltung nach Anspruch 9, **dadurch gekennzeichnet, dass** statt des ohmschen Widerstandes ein vierter Strombegrenzer (127) in Reihe zur Leuchtdiodenkette und dem ersten Strombegrenzer geschaltet ist.

11. Leuchtdiodenschaltng nach einem der vorherigen Ansprüche, **gekennzeichnet durch** einen fünften Strombegrenzer (129), welcher zwischen dem Speisekondensator und der Leuchtdiodenkette geschaltet ist.

12. Leuchte, insbesondere Straßenlaterne, welche eine Leuchtdiodenschaltung nach einem der vorherigen Ansprüche aufweist.

## Claims

1. Light-emitting diode circuit (101) having a light-emitting diode chain (103), a first current limiter (105), a second current limiter (109) and a feed capacitor (107),
wherein the light-emitting diode chain and the first current limiter are connected in series and the feed capacitor and the second current limiter are connected in series, in parallel with the light-emitting diode chain and the first current limiter, so that in the case of a shortfall in a supply voltage (147) of the light-emitting diode chain, the feed capacitor applies a current to the light-emitting diode chain,
wherein the light-emitting diode circuit comprises a controller which is realized by means of a microprocessor circuit, **characterized in that** the second current limiter is embodied as a settable current limiter and the controller (113) is configured to set (143), on the basis of a voltage drop (141) at the first current limiter, a value of the settable second current limiter when charging the feed capacitor.

2. Light-emitting diode circuit according to Claim 1, **characterized in that** a diode (111) is connected in parallel with the settable second current limiter.

3. Light-emitting diode circuit according to either of the preceding claims, **characterized by** a rectifier circuit (131) which is embodied to convert an AC voltage into a DC voltage.

4. Light-emitting diode circuit according to any of the preceding claims, **characterized by** a dimmer, in particular a phase-chopping dimmer, which is useable for a brightness adjustment of the light-emitting diode chain.

5. Light-emitting diode circuit according to any of the preceding claims, **characterized by** a voltage supply which supplies the light-emitting diode circuit with energy.

6. Light-emitting diode circuit according to any of the preceding claims, **characterized by** a controllable voltage supply switch (119) which is actuatable in such a way, that above a limit value of the voltage drop of the first current limiter, said switch is in an open position, and below the limit value of the voltage drop of the first current limiter, or upon said limit value being reached, said switch is in a closed position.

7. Light-emitting diode circuit according to Claim 6, **characterized in that** the controller is embodied to actuate the voltage supply switch.

8. Light-emitting diode circuit according to any of Claims 4 to 7, **characterized in that** a third current limiter (123) and a current limiter switch (121) are arranged in parallel with the light-emitting diode chain and the first current limiter, wherein the third current limiter and the current limiter switch are connected in series and the light-emitting diode circuit is configured in such a way that the third current limiter applies a minimum dimmer current to the dimmer as a result of switching of the current limiter switch.

9. Light-emitting diode circuit according to any of the preceding claims, **characterized by** a surge voltage withstand circuit which comprises a voltage limiter (133), in particular a varistor, on the voltage supply side and a Zener diode (125), in particular a TVS diode, is arranged in parallel with the light-emitting diode chain and the first current limiter and comprises an ohmic resistor arranged in series with the light-emitting diode chain and first current limiter.

10. Light-emitting diode circuit according to Claim 9, **characterized in that** instead of the ohmic resistor, a fourth current limiter (127) is connected in series with the light-emitting diode chain and the first current limiter.

11. Light-emitting diode circuit according to any of the preceding claims, **characterized by** a fifth current limiter (129), which is connected between the feed capacitor and the light-emitting diode chain.

12. Luminaire, in particular a street lamp, which comprises a light-emitting diode circuit according to any of the preceding claims.

## Revendications

1. Circuit de diodes électroluminescentes (101) comprenant une chaîne de diodes électroluminescentes (103), un premier limiteur de courant (105), un deuxième limiteur de courant (109) et un condensateur d'alimentation (107), la chaîne de diodes électroluminescentes et le premier limiteur de courant étant branchés en série et, en parallèle avec la chaîne de diodes électroluminescentes et le premier limiteur de courant, le condensateur d'alimentation et le deuxième limiteur de courant étant branchés en série, de sorte qu'en cas de franchissement vers le bas d'une tension d'alimentation (147) de la chaîne de diodes électroluminescentes, le condensateur d'alimentation applique un courant à la chaîne de diodes électroluminescentes, le circuit de diodes électroluminescentes possédant une commande qui est réalisée par un circuit à microprocesseur,
**caractérisé en ce que** le deuxième limiteur de courant est réalisé sous la forme d'un limiteur de courant réglable et la commande (113) est conçue pour régler (143) une valeur du deuxième limiteur de courant réglable lors de la charge du condensateur d'alimentation à l'aide d'une chute de tension (141) au niveau du premier limiteur de courant.

2. Circuit de diodes électroluminescentes selon la revendication 1, **caractérisé en ce qu'**une diode (111) est branchée en parallèle du deuxième limiteur de courant réglable.

3. Circuit de diodes électroluminescentes selon l'une des revendications précédentes, **caractérisé par** un circuit redresseur (131) qui est configuré pour transformer une tension alternative en une tension continue.

4. Circuit de diodes électroluminescentes selon l'une des revendications précédentes, **caractérisé par** un gradateur de lumière, notamment un gradateur de lumière par paliers, qui peut être utilisé pour un réglage de la luminosité de la chaîne de diodes électroluminescentes.

5. Circuit de diodes électroluminescentes selon l'une des revendications précédentes, **caractérisé par** une alimentation électrique qui alimente le circuit de diodes électroluminescentes avec de l'énergie.

6. Circuit de diodes électroluminescentes selon l'une des revendications précédentes, **caractérisé par** un commutateur d'alimentation électrique (119) commandable qui peut être commandé de telle sorte qu'il se trouve dans une position ouverte au-dessus d'une valeur limite de la chute de tension du premier limiteur de courant et dans une position fermée au-dessous de la valeur limite de la chute de tension du premier limiteur de courant ou lorsque celle-ci est atteinte.

7. Circuit de diodes électroluminescentes selon la revendication 6, **caractérisé en ce que** la commande est configurée pour commander le commutateur d'alimentation électrique.

8. Circuit de diodes électroluminescentes selon l'une des revendications 4 à 7, **caractérisé en ce qu'**un troisième limiteur de courant (123) et un commutateur de limiteur de courant (121) sont disposés en parallèle avec la chaîne de diodes électroluminescentes et le premier limiteur de courant, le troisième limiteur de courant et le commutateur de limiteur de courant étant branchés en série et le circuit de diodes électroluminescentes étant conçu de telle sorte que par une commutation du commutateur de limiteur de courant, le troisième limiteur de courant applique un courant minimal de gradateur de lumière au gradateur de lumière.

9. Circuit de diodes électroluminescentes selon l'une des revendications précédentes, **caractérisé par** un circuit de résistance aux ondes de surtension, lequel possède un limiteur de tension (133), notamment une varistance, du côté de la tension d'alimentation, et une diode zener (125), notamment une diode TVS, est disposée en parallèle de la chaîne de diodes électroluminescentes et du premier limiteur de courant et possède une résistance ohmique montée en série avec la chaîne de diodes électroluminescentes et le premier limiteur de courant.

10. Circuit de diodes électroluminescentes selon la revendication 9, **caractérisé en ce qu'**un quatrième limiteur de courant (127) est branché en série avec la chaîne de diodes électroluminescentes et le premier limiteur de courant à la place de la résistance ohmique.

11. Circuit de diodes électroluminescentes selon l'une des revendications précédentes, **caractérisé par** un cinquième limiteur de courant (129) qui est branché entre le condensateur d'alimentation et la chaîne de diodes électroluminescentes.

12. Lampe, notamment réverbère, qui possède un circuit de diodes électroluminescentes selon l'une des revendications précédentes.
